# EUROPEAN PATENT APPLICATION

(11) **EP 3 885 939 A1**
(43) Date of publication of application: **29.09.2021**
(21) Application number: 20744924.0
(22) Date of filing: 04.01.2020
(51) Int. Cl.: G06F 16/9535

(54) **INFORMATION QUERY METHOD, APPARATUS, DEVICE, AND STORAGE MEDIUM**

(30) Priority: 25.01.2019 CN 201910071528
(71) Applicant: Huawei Technologies Co., Ltd., Shenzhen Guangdong 518129 (CN)
(72) Inventor: LI, Qiwei, Shenzhen, Guangdong 518129 (CN)
(74) Representative: Gill Jennings & Every LLP
(86) International application number: PCT/CN2020/070359
(87) International publication number: WO 2020/151482

(57) **Abstract**

This application provides an information query method and apparatus, a device, and a storage medium, and pertains to the field of network technologies. In embodiments of this application, a network device groups information of a query object based on a target attribute in a query request, and generates a query response based on a group obtained through the grouping. In comparison with the prior art in which a query response carries all information related to a query item, in this application, the network device groups the information, so that an amount of data that needs to be transmitted is reduced, thereby reducing communication time and saving resources of the network device and a network management device. Further, the grouping is performed by the network device, so that software implementation of the network management device is simplified, and memory overheads of the network management device for performing the grouping are reduced, thereby improving running performance of network management software.

## Description

This application claims priority to Chinese Patent Application No. 201910071528.0, filed with the China National Intellectual Property Administration on January 25, 2019 and entitled "INFORMATION QUERY METHOD and APPARATUS, DEVICE, AND STORAGE MEDIUM", which is incorporated herein by reference in its entirety.

### TECHNICAL FIELD

This application relates to the field of network technologies, and in particular, to an information query method and apparatus, a device, and a storage medium.

### BACKGROUND

A Network Configuration Protocol (NETCONF) is a network management protocol, and the protocol defines an interface and information exchange between a network management device and a network device. The network management device may query information in the network device by using NETCONF, to manage the network device by using the found information.

In current NETCONF, the network management device generates a query request when the network management device needs to query the information in the network device, and the query request specifies a query item. The network management device sends the query request to the network device. The network device receives the query request, and queries, based on the query request, all information that is related to the query item and that is in the network device. The network device generates a query response based on all the information related to the query item, and sends the query response to the network management device. The query response carries all the information that is related to the query item and that is in the network device. The network management device receives and parses the query response to obtain all the information that is related to the query item and that is in the network device. The network management device performs a subsequent operation based on all the information that is related to the query item and that is in the network device.

When the foregoing method is used to query information, the network device needs to transmit all the information related to the query item to the network management device. Consequently, an excessively large amount of data is transmitted, resources of the network device and the network management device are occupied, and processing efficiency of the network device and the network management device is reduced.

### SUMMARY

Embodiments of this application provide an information query method and apparatus, a device, and a storage medium, to resolve a technical problem in the related art that an excessively large amount of data is transmitted because a network device needs to transmit all information related to a query item to a network management device.

According to a first aspect, an information query method is provided, and the method includes:
receiving a query request from a network management device, where the query request includes a query object, a target attribute, and a first keyword, the first keyword is used to instruct a network device to group information of the query object, and the target attribute is an attribute based on which the grouping is performed;
grouping the information of the query object based on the target attribute to obtain at least one group;
generating a query response based on the at least one group; and
sending the query response to the network management device.

In the method provided in this embodiment, the network device groups the information of the query object based on the first keyword and the target attribute in the query request, and generates the query response based on a group obtained through the grouping. In comparison with the prior art in which a query response carries all information related to a query item, in this embodiment, the network device groups the information, so that an amount of data that needs to be transmitted is reduced, thereby reducing communication time, saving resources of the network device and the network management device, and improving processing efficiency of the network device and the network management device. Further, the grouping is performed by the network device, so that software implementation of the network management device is simplified, and memory overheads of the network management device for performing the grouping are reduced, thereby improving running performance of network management software.

Optionally, the grouping the information of the query object based on the target attribute to obtain at least one group includes:
obtaining at least one value of the target attribute; and
grouping the information of the query object based on the at least one value to obtain the at least one group, where each value corresponds to one group.

Optionally, the generating a query response based on the at least one group includes:
aggregating information in each of the at least one group by using an aggregate function, to obtain an aggregate result of each group; and generating the query response based on the aggregate result of each group.

In the foregoing implementation, the network device groups the information of the query object based on the target attribute in the query request, aggregates the information in each group, and generates the query response based on the aggregate result of each group. In comparison with the prior art in which a query response carries all information related to a query item, in the grouping and aggregation processes, the amount of data that needs to be transmitted by the network device is reduced, resources of the network device and the network management device are saved, and processing efficiency of the network device and the network management device is improved. Further, the grouping and the aggregation are performed by the network device, so that software implementation of the network management device is simplified, and memory overheads of the network management device for performing the grouping and the aggregation are reduced, thereby improving running performance of network management software.

Optionally, the generating a query response based on the at least one group includes:
generating the query response based on a value of a target attribute corresponding to each of the at least one group.

Optionally, the aggregating information in each of the at least one group by using an aggregate function, to obtain an aggregate result of each group includes any one of the following:
obtaining a quantity of pieces of information in each group by using a count function, and using the quantity as the aggregate result of each group;
obtaining a maximum value of information in each group by using a maximum value function, and using the maximum value as the aggregate result of each group;
obtaining a minimum value of information in each group by using a minimum value function, and using the minimum value as the aggregate result of each group;
obtaining an average value of information in each group by using an average value function, and using the average value as the aggregate result of each group;
obtaining a sum of information in each group by using a summation function, and using the sum as the aggregate result of each group;
obtaining a variance of information in each group by using a variance function, and using the variance as the aggregate result of each group; and
obtaining a standard deviation of information in each group by using a standard deviation function, and using the standard deviation as the aggregate result of each group.

Optionally, the query request further includes a second keyword, and the second keyword is used to indicate the aggregate function; and correspondingly, before the aggregating information in each of the at least one group by using an aggregate function, the method further includes:
determining the aggregate function based on the second keyword.

Optionally, the generating the query response based on the aggregate result of each group includes any one of the following:
generating the query response based on the aggregate result of each group and the value of the target attribute corresponding to each group; and
obtaining, through filtering based on the aggregate result of each group, a target group whose aggregate result meets a filter criteria from the at least one group, and generating the query response based on information in the target group.

In the foregoing implementation, the network device groups the information of the query object based on the target attribute in the query request, aggregates the information in each group, obtains, through filtering based on the aggregate result of each group, the target group whose aggregate result meets the filter criteria from the at least one group, and generates the query response based on the information in the target group. In comparison with the prior art in which a query response carries all information related to a query item, in the grouping, aggregation, and filtering processes in the foregoing implementation, an amount of data that needs to be transmitted is reduced, resources of the network device and the network management device are saved, and processing efficiency of the network device and the network management device is improved. Further, the grouping, the aggregation, and the filtering are performed by the network device, so that software implementation of the network management device is simplified, and memory overheads of the network management device for performing the steps of grouping, aggregation, and filtering are reduced, thereby improving running performance of network management software.

Optionally, the query request further includes the filter criteria.

Optionally, the generating the query response based on information in the target group includes:
generating the query response based on the aggregate result of the target group and a value of the target attribute of a data object in the target group; or
generating the query response based on a value of each attribute of a data object in the target group.

Optionally, the query response includes the value of the target attribute corresponding to each group and/or the aggregate result of each group.

In the foregoing implementation, a plurality of manners of generating the query response by the network device are provided, thereby improving flexibility of the network device.

According to a second aspect, an information query apparatus is provided, and the apparatus is configured to perform the foregoing information query method. Specifically, the information query apparatus includes a function module configured to perform the information query method in any one of the first aspect and the optional manners of the first aspect.

According to a third aspect, a network device is provided. The network device includes one or more processors and one or more volatile or non-volatile memories, the one or more volatile or non-volatile memories store instructions, and the instruction is loaded and executed by the one or more processors to implement the information query method in any one of the first aspect and the optional manners of the first aspect.

According to a fourth aspect, a computer readable storage medium is provided. The storage medium stores an instruction, and the instruction is loaded and executed by a processor to implement the information query method in any one of the first aspect and the optional manners of the first aspect.

According to a fifth aspect, a computer program product including an instruction is provided. When the computer program product runs on a network device, the network device is enabled to implement the information query method in any one of the first aspect and the optional manners of the first aspect.

According to a sixth aspect, a chip is provided. The chip includes a processor and/or a program instruction, and when the chip runs, the information query method in any one of the first aspect and the optional manners of the first aspect is implemented.

### BRIEF DESCRIPTION OF DRAWINGS

FIG. 1 is an architectural diagram of an implementation environment according to an embodiment of this application;
FIG. 2 is a schematic structural diagram of a network device according to an embodiment of this application;
FIG. 3 is a flowchart of an information query method according to an embodiment of this application;
FIG. 4 is a flowchart of an information query method according to an embodiment of this application;
FIG. 5 is a flowchart of an information query method according to an embodiment of this application;
FIG. 6 is a logical architectural diagram of a network device and a network management device according to an embodiment of this application; and
FIG. 7 is a schematic structural diagram of an information query apparatus according to an embodiment of this application.

### DESCRIPTION OF EMBODIMENTS

To make the objectives, technical solutions, and advantages of this application clearer, the following further describes the implementations of this application in detail with reference to the accompanying drawings.

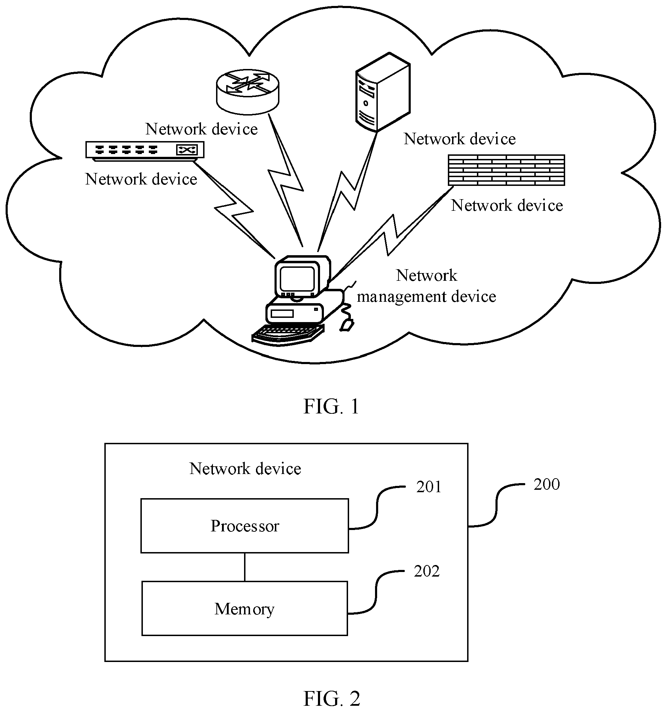

FIG. 1 is an architectural diagram of an implementation environment according to an embodiment of this application. The implementation environment includes a network management device and at least one network device. The network management device and the at least one network device may be connected by using a network. The network management device may query information in the network device, and the network device may return the information queried by the network management device to the network management device.

The network management device is configured to manage the network device. The network management device may be a server, a personal computer (PC), or a mobile terminal, and a specific form of the network management device is not limited in this embodiment.

The network device may be a server, a switch, a router, a relay, a bridge, a firewall, a mobile terminal, a personal computer, a notebook computer, a serving gateway (SGW), a packet data network gateway (PGW), an optical network terminal (ONT), an optical network unit (ONU), an optical splitter, an internet of things terminal, or the like, and a specific form of the network device is not limited in this embodiment.

As shown in the following embodiment in FIG. 2, the network device may be implemented by hardware. The network device may be alternatively implemented by software. For example, the network device may be a virtual machine, a container, an application, a service, a microservice, a module, or a submodule. For example, the network device may be implemented by using a network function virtualization (NFV) technology. For example, the network device may be a virtual network function (VNF) or a virtual network function component (VNFC). In addition, the network device may be software running on one device, or may be a set of software running on a plurality of devices. A specific form of the network device is not limited in this embodiment.

The network management device and the network device may exchange information based on NETCONF. Specifically, the network management device may query configuration data in the network device by using NETCONF. A message transmitted between the network management device and the network device may be encoded by using an Extensible Markup Language (XML) format. The message transmitted between the network management device and the network device may be transmitted in a Remote Procedure Call (RPC) manner. The network management device may run a NETCONF client, and the network device may run a NETCONF server. The network management device sends a query request to the server by using the NETCONF client to query configuration data of the server. The network device may receive, by using the NETCONF server, a query request sent by the client, query configuration data of the network management device, and return a query response to the client based on the found configuration data. The network management device may receive, by using the NETCONF client, the query response returned by the server, to obtain the configuration data of the server.

FIG. 2 is a schematic structural diagram of a network device according to an embodiment of this application. The network device 200 may vary greatly due to different configurations or performance, and may include one or more processors 201 and one or more volatile or non-volatile memories 202. The processor 201 may be, for example, a central processing unit (CPU). The one or more volatile or non-volatile memories 202 store instructions, and the instruction is loaded and executed by the one or more processors 201 to implement the information query method provided in the following method embodiments. Certainly, the network device 200 may further include components such as a wired or wireless network interface and an input/output interface, to transmit data. The network device 200 may further include another component configured to implement a device function. Details are not described herein. An operating system running on the network device 200 may be a Linux operating system, a Windows operating system, or the like. The operating system of the network device is not limited in this embodiment.

In an embodiment, this application further provides a computer readable storage medium. The computer readable storage medium stores an instruction, and the instruction may be executed by a processor to complete the information query method in the following embodiments. For example, the computer readable storage medium may be a read-only memory (ROM), a random access memory (RAM), a compact disc read-only memory (CD-ROM), a tape, a floppy disk, or an optical data storage device.

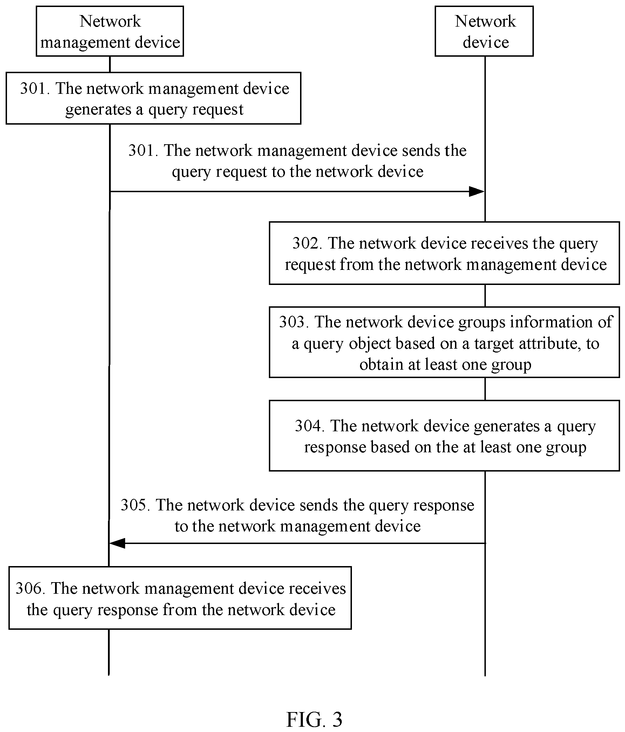

FIG. 3 is a flowchart of an information query method according to an embodiment of this application. As shown in FIG. 3, the method includes steps 301 to 306 that are interactively performed by a network management device and a network device.

301. The network management device generates a query request, and the network management device sends the query request to the network device.

The query request may be a message in NETCONF. For example, the query request may be an RPC message in NETCONF. In NETCONF, the RPC message is a message sent by a NETCONF client to a NETCONF server, and the RPC message is used to request the server to perform a query operation. The RPC message is identified by a start tag <rpc> and an end tag </rpc>, and content between the start tag <rpc> and the end tag </rpc> specifies a query item. The NETCONF client is the network management device, and the NETCONF server is the network device.

Certainly, the query request may be alternatively a message other than the RPC message in NETCONF. A message type of the query request is not specifically limited in this embodiment. Certainly, the query request may be alternatively a message in a network management protocol other than NETCONF. For example, the query request may be a Simple Network Management Protocol (SNMP) message. A network management protocol to which the query request belongs is not limited in this embodiment.

The query request is used to query information of a query object in the network device. The query request includes the query object, a target attribute, and a first keyword.

The query object is any object to be queried by the network device. For example, the query object may be a routing entry. For another example, the query object may be a security policy. The query object may have one or more attributes. In an example in which the query object is a routing entry, an attribute of the query object may include any one or more of a destination Internet Protocol (IP) address, a subnet mask, a routing protocol, a routing overhead, a next-hop IP address, an outbound interface, and a route priority. In an example in which the query object is a security policy, an attribute of the query object may include at least one of a traffic direction, a source IP address, a destination IP address, behavior, and a service type. Assuming that the query object is described by using a tree-like data structure, the query object is a node, and each attribute of the query object may be in a one-to-one correspondence with each child node of the node. Assuming that the query object is described by using a data structure of a list, the query object is a list, and each attribute of the query object may be in a one-to-one correspondence with each column in the list.

The information of the query object may include at least one value of at least one attribute of the query object. Optionally, if any attribute of the query object has a plurality of values, the information of the query object may include each of the plurality of values of the attribute of the query object. Optionally, if the query object has a plurality of attributes, the information of the query object may include a value of each of the plurality of attributes of the query object. Optionally, the information of the query object may be configuration data. The configuration data of the query object is data configured on the network device, and includes but is not limited to a routing entry, a security policy, and the like. Certainly, the information of the query object may be alternatively data other than the configuration data of the query object. For example, the information of the query object may be status information or description information. The status information is used to describe a current running status of the network device, and the description information is used to describe information related to the network device (for example, a software version number of the network device). The information of the query object is not limited in this embodiment.

In an example in which the query object is a routing entry, the information of the query object may include any one or a combination of a value of a destination IP address, a value of a subnet mask, an identifier of a routing protocol, a value of a routing overhead, a value of a next-hop IP address, an identifier of an outbound interface, and a value of a route priority. For example, if an attribute is an outbound interface, the information of the query object may include an identifier of each outbound interface of the network device. For example, the information of the query object may include "E0", "E1", and "E2". E in "E0", "E1", and "E2" is used to represent an outbound interface, and a digit after E represents a number of the outbound interface. If an attribute is a destination IP address, the information of the query object may include a value of at least one destination IP address. For example, the information of the query object may include "192.168.1.0" and "127.0.0.0". For another example, for an attribute "routing overhead", the information of the query object may include a value of at least one routing overhead. For example, the information of the query object may include "60", "100", and "80". If an attribute is a routing protocol, the information of the query object may include an identifier of each routing protocol. For example, the information of the query object may include a "static route (static)", "Open Shortest Path First (OSPF)", a "Routing Information Protocol (RIP)", and a "Border Gateway Protocol (BGP)".

In an example in which the query object is a security policy, the information of the query object may include at least one of an identifier of a source security zone, an identifier of a destination security zone, a value of a source IP address, a value of a destination IP address, an identifier of behavior, and an identifier of a service type. For example, if an attribute is behavior, the information of the query object may include an identifier of each type of behavior. For example, the information of the query object may include an identifier of permitted behavior and an identifier of denied behavior, for example, may include "permit" and "deny". For another example, if an attribute is a service type, the information of the query object may include an identifier of at least one service type. For example, the information of the query object may include an identifier of a video download service, an identifier of a social communication service, an identifier of an antivirus service, and an identifier of an email service, for example, may be "xxxdownload", "yyymail", and "zzzvideo". For another example, if an attribute is a traffic direction, the information of the query object may include an identifier of a source security zone and an identifier of a destination security zone. For example, the information of the query object may include "trust→untrust" (trust is a source security zone, untrust is a destination security zone, and → represents a traffic direction from a tail end of an arrow to a head end of the arrow). For another example, if an attribute is a destination IP address, the information of the query object may include a value of at least one destination IP address. For example, the information of the query object may include "192.168.1.0" and "127.0.0.0".

The first keyword is used to instruct the network device to group the information of the query object. Specifically, if the query request includes the first keyword, the query request instructs the network device to group the information of the query object, or if the query request does not include the first keyword, the query request instructs the network device to send all information of the query object. A form of the first keyword may be any one or a combination of a character, a digit, and a letter. For example, the first keyword may be "group-by (namely, grouping)."

The target attribute is an attribute based on which the grouping is performed. The target attribute may be referred to as an aggregate attribute. Specifically, any one of one or more attributes of the query object may be used as the target attribute in the query request based on a grouping requirement, so that the network device groups the information of the query object based on the target attribute in the query request.

In an example scenario, for example, the query object is a routing entry. Assuming that a total quantity of values of outbound interfaces in the routing entry needs to be known, an outbound interface may be used as the target attribute in the query request, so that the network device uses, based on the query request, the outbound interface as an attribute based on which information about the routing entry is grouped. For example, the query object is still a routing entry. Assuming that a total quantity of routing protocols in the routing entry needs to be known, a routing protocol may be used as the target attribute in the query request, so that the network device uses, based on the query request, the routing protocol as an attribute based on which information about the routing entry is grouped. In another example scenario, for example, the query object is a security policy. Assuming that a total quantity of types of behavior performed on traffic in the security policy needs to be known, behavior may be used as the target attribute in the query request, so that the network device uses, based on the query request, the behavior as an attribute based on which information about the security policy is grouped.

There may be one or more target attributes in the query request. Optionally, if the query request includes a plurality of target attributes, the plurality of target attributes may belong to a same level. In other words, the plurality of target attributes may be in a parallel relationship rather than a parent-child relationship. In an example in which the query object is a routing entry, the query request may include two target attributes: an outbound interface and a routing overhead. In an example in which the query object is a security policy, the query request may include two target attributes: a name of the security policy and behavior.

Optionally, the query request may be a message in an XML format, and the query request may organize each type of content by using a tree-like data structure. Each type of content corresponds to one node in the query request, and any node in the query request may be parsed to obtain corresponding content from the node. If the query request uses the XML format, the query object, the target attribute, and the first keyword may correspond to different nodes or a same node in the query request.

An example in which a node corresponding to the query object is referred to as a first node, a node corresponding to the first keyword is referred to as a second node, and a node corresponding to the target attribute is referred to as a third node is used to describe a logical relationship among the first node, the second node, and the third node. The logical relationship among the first node, the second node, and the third node includes but is not limited to any one or a combination of the following (1) and (2).
(1) The first node, the second node, and the third node may be mutually nested, or in other words, different nodes may be a master node and a child node of each other. In a possible implementation, levels of the first node, the second node, and the third node in the query request may be arranged in descending order. Specifically, the second node may be a child node of the first node, and the third node may be a child node of the second node.
(2) The first node, the second node, and the third node may be parallel to each other, or in other words, the first node, the second node, and the third node may be brother nodes of each other.

Optionally, the first node, the second node, and the third node in the query request may be indicated by using a preset mark. The preset mark is used to identify a corresponding node in the query request, and may be a tag in the XML format. For example, the first node may be indicated by <filter type is a subtree> (which may be recorded as <filter type="subtree"> in a program), the second node may be indicated by <grouping> (which may be recorded as <group-by> in a program), and the third node may be indicated by <key value> (which may be recorded as <key> in a program). The target attribute may be an attribute in a configured subtree (subtree) that needs to be queried, that is, a specified level of attribute of a subtree represented by configuration data indicated by a filter (which may be recorded as filter in a program).

In an example in which the logical relationship among the first node, the second node, and the third node is the foregoing (1), content of the query request may be shown below, where "vsys.static-policy" represents the query object, and the query object is indicated by <filter type="subtree">; "group-by" represents the first keyword; and "action" represents the target attribute, and the target attribute is indicated by <key>.

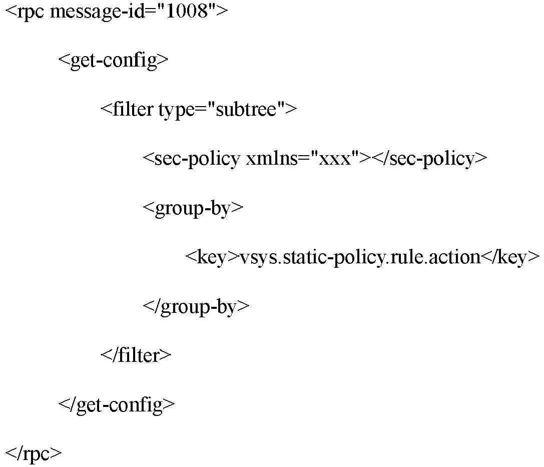

In the query request, a program statement in the first line means that an identification (id) number of an RPC message is "1008". A program statement in the second line is a start tag and means to obtain configuration data. A program statement in the third line is a start tag and means that a type of a filter is a subtree. A program statement in the fourth line means to output a child node of a "sec-policy" node in "xxx" namespace. A program statement in the fifth line is a start tag including the first keyword "group-by" and means to group information indicated by a key in a program statement in a next line, that is, group information about a "rule" child node of the "sec-policy" node. A program statement in the sixth line means that the query object is the information about the "rule" child node of the "sec-policy" node, and the target attribute is "action". A program statement in the seventh line is an end tag corresponding to the program statement in the fifth line. A program statement in the eighth line is an end tag corresponding to the program statement in the third line. A program statement in the ninth line is an end tag corresponding to the program statement in the second line. A program statement in the tenth line is an end tag corresponding to the program statement in the first line.

It should be noted that the foregoing (1) and (2) are merely examples for describing the logical relationship among the first node, the second node, and the third node in the query request, and the first node, the second node, and the third node may further have a logical relationship other than the foregoing (1) and (2). A logical relationship between different nodes in the query request is not limited in this embodiment.

It should be further noted that, that the query request is in the XML format is merely an example for description. In another possible embodiment, the query request may be in a format other than the XML format. This is not limited in this embodiment.

302. The network device receives the query request from the network management device.

After receiving the query request, the network device may parse the query request to obtain the query object, the first keyword, and the target attribute in the query request. The network device may determine, based on the first keyword, to group the information of the query object, and the network device may determine, based on the target attribute, the attribute based on which the grouping is performed. In this case, the network device performs the following step 303 to implement a grouping query function.

Optionally, if the query request is a message in the XML format, corresponding to the foregoing description, the network device may obtain the query object from the first node in the query request, obtain the first keyword from the second node in the query request, and obtain the target attribute from the third node in the query request. For example, assuming that the query request is shown above, the query object "vsys.static-policy" may be obtained from a "filter" node, the first keyword "group-by" may be obtained from a "group-by" node, and the target attribute "action" may be obtained from the "group-by" node.

303. The network device groups the information of the query object based on the target attribute, to obtain at least one group.

In a possible implementation, a process of grouping the information of the query object may include the following step 1 and step 2.

Step 1: The network device obtains at least one value of the target attribute.

Specifically, the network device may query the information of the query object for a value of the target attribute of the query object, based on the target attribute and the query object, to obtain the at least one value of the target attribute.

In a possible implementation, a data structure of the information of the query object may be a tree, and an attribute of the query object is a node in the tree. In this implementation, the network device may determine, from at least one node in the tree, a target node corresponding to the target attribute, obtain data stored in the target node, and use the data as a value of the target attribute.

For example, the query object is a security policy, and the target attribute is behavior. It is assumed that a network device stores two security policies, a security policy 1 corresponds to a tree 1, and a security policy 2 corresponds to a tree 2. In addition, it is assumed that a value of an action is stored in the third node of each tree. In this case, the network device may determine, from at least one node of the tree 1, a node 1-3 corresponding to the action, obtain data stored in the node 1-3, and obtain an identifier "permit" of the behavior; and determine, from at least one node of the tree 2, a node 2-3 corresponding to the action, obtain data stored in the node 2-3, and obtain an identifier "deny" of the behavior. Therefore, it may be learned that values of the behavior may include "permit" and "deny". "1-3" and "2-3" are IDs of nodes, where a digit before the symbol "-" identifies a tree, and a digit after the symbol "-" identifies a node in the tree. For example, a node k-m represents an m^{th} node in a tree k, and k and m are integers.

In another possible implementation, a data structure of the information of the query object may be a list, and an attribute of the query object is a column in the list. In this implementation, the network device may determine, from at least one column in the list, a target column corresponding to the target attribute, obtain data stored in the target column, and use the data as a value of the target attribute. For example, all fields in the target column may be traversed, a value of each field in the target column is obtained, and the value is used as the at least one value of the target attribute.

For example, the query object is a routing entry, and the target attribute is an outbound interface. It is assumed that a network device stores three routing entries: a routing entry 1, a routing entry 2, and a routing entry 3. In addition, it is assumed that a value of the outbound interface is stored in the first column of each routing entry. In this case, the network device may determine, from at least one column of the routing entry 1, the first column corresponding to the outbound interface, obtain data stored in the first column of the routing entry 1, and obtain an identifier "E0" of the outbound interface; determine, from at least one column of the routing entry 2, the first column corresponding to the outbound interface, obtain data stored in the first column of the routing entry 2, and obtain an identifier "E1" of the outbound interface; and determine, from at least one column of the routing entry 3, the first column corresponding to the outbound interface, obtain data stored in the first column of the routing entry 3, and obtain an identifier "E2" of the outbound interface.

Step 2: The network device groups the information of the query object based on the at least one value, to obtain the at least one group, where each value corresponds to one group.

The network device may group the information of the query object based on whether values of a target attribute of the information are the same. Specifically, information whose values of the target attribute are the same may be classified into a same group, and information whose values of the target attribute are different may be classified into different groups. In this way, in the obtained at least one group, values of the target attribute of all information in a same group are the same, and values of an attribute other than the target attribute of all the information in the same group may be different or the same. Values of the target attribute of information in different groups are different. Each value of the target attribute is in a one-to-one correspondence with each group. Specifically, assuming that the obtained target attribute has N values, N groups may be obtained through classification. A value 1 of the target attribute corresponds to a group 1, a value 2 of the target attribute corresponds to a group 2, and by analogy, a value i of the target attribute corresponds to a group i, where N and i are positive integers, and i is less than or equal to N.

In an example scenario, for example, the query object is a routing entry, and the target attribute is an outbound interface. The network device groups routing entries based on identifiers of outbound interfaces. It is assumed that the identifiers of the outbound interfaces include "E0", "E1", and "E2". In this case, when performing grouping, the network device classifies a routing entry whose identifier of an outbound interface is "E0" into a group 1, classifies a routing entry whose identifier of an outbound interface is "E1" into a group 2, and classifies a routing entry whose identifier of an outbound interface is "E2" into a group 3. In this way, a total of three groups are obtained through classification. "E0" corresponds to the group 1, and an identifier of an outbound interface in each routing entry in the group 1 is "E0"; "E1" corresponds to the group 2, and an identifier of an outbound interface in each routing entry in the group 2 is "E1"; and "E2" corresponds to the group 3, and an identifier of an outbound interface in each routing entry in the group 3 is "E2".

In another example scenario, for example, the query object is a routing entry, and the target attribute is a routing protocol. The network device groups information about routing entries based on identifiers of routing protocols. It is assumed that the identifiers of the routing protocols in the routing entries include "Static", "OSPF", "RIP", and "BGP". In this case, when performing grouping, the network device classifies a routing entry whose routing protocol identifier is "Static" into a group 1, classifies a routing entry whose routing protocol identifier is "OSPF" into a group 2, classifies a routing entry whose routing protocol identifier is "RIP" into a group 3, and classifies a routing entry whose routing protocol identifier is "BGP" into a group 4. In this way, a total of four groups are obtained through classification. "Static" corresponds to the group 1, and an identifier of a routing protocol in each routing entry in the group 1 is "Static"; "OSPF" corresponds to the group 2, and an identifier of a routing protocol in each routing entry in the group 2 is "OSPF"; "RIP" corresponds to the group 3, and an identifier of a routing protocol in each routing entry in the group 3 is "RIP"; and "BGP" corresponds to the group 4, and an identifier of a routing protocol in each routing entry in the group 4 is "BGP".

In another example scenario, for example, the query object is a security policy, and the target attribute is behavior performed on traffic. The network device groups information about security policies based on identifiers of behavior. It is assumed that the identifiers of the behavior include "permit" and "deny". In this case, when performing grouping, the network device classifies a security policy whose behavior identifier is "permit" into a group 1, and classifies a security policy whose behavior identifier is "deny" into a group 2. In this way, a total of two groups are obtained through classification. "Permit" corresponds to the group 1, and an identifier of behavior in each security policy in the group 1 is "permit"; and "deny" corresponds to the group 2, and an identifier of behavior in each security policy in the group 2 is "deny".

Optionally, if the query request includes a plurality of target attributes, for each of the plurality of target attributes, step 303 may be performed based on the target attribute, to obtain at least one group corresponding to each target attribute. In other words, step 303 may be performed for a plurality of times, to implement a function of sequentially performing grouping based on the plurality of target attributes. The performing step 303 for a plurality of times may include: concurrently performing step 303 for a plurality of times and sequentially performing step 303 for a plurality of times. This is not limited in this embodiment.

In an example scenario, assuming that the query object is a routing entry, and the query request includes two target attributes: an outbound interface and a routing overhead, routing entries may be grouped based on outbound interfaces, and the found routing entries may be grouped based on routing overheads. In another example scenario, assuming that the query object is a security policy, and the query request includes two target attributes: a name of the security policy and behavior, security policies may be grouped based on names of found security policies, and the security policies may be grouped based on behavior.

304. The network device generates a query response based on the at least one group.

The query response is used to respond to the query request sent by the network management device. The query response may be in a one-to-one correspondence with the query request. In a possible implementation, the query response may have a message identifier (message id), the message identifier in the query response may be the same as a message identifier in a corresponding query request, and the query response may specify, by using the same message identifier, a query request corresponding to the query response. For example, assuming that the message identifier of the query request is i, the message identifier of the query response corresponding to the query request may also be i.

The query response may be a message in any network management protocol. Specifically, the query response may be a message in NETCONF. For example, the query response may be a rpc-reply message in NETCONF. In NETCONF, the RPC-reply message is a message sent by a NETCONF server to a NETCONF client, and the RPC-reply message is used to return a query result to the client. The RPC-reply message is identified by a start tag <rpc-reply> and an end tag </rpc-reply>. Content between the start tag <rpc-reply> and the end tag </rpc-reply> specifies the query result. The RPC-reply message is in a one-to-one correspondence with the RPC message, and the RPC-reply message and the corresponding RPC message may have a same message identifier.

Certainly, the query response may be alternatively a message other than the RPC-reply message in NETCONF. A message type of the query response is not specifically limited in this embodiment. Certainly, the query response may be alternatively a message in a network management protocol other than NETCONF. For example, the query response may be a message in SNMP. A network management protocol to which the query response belongs is not limited in this embodiment. The query response and the query request may belong to a same network management protocol. For example, both the query response and the query request may be messages in NETCONF.

The query response may include information in the at least one group. In a possible embodiment, the network device may generate the query response based on a value of a target attribute corresponding to each of the at least one group. Correspondingly, the query response may include the value of the target attribute corresponding to each of the at least one group.

In an example scenario, for example, the query object is a routing entry. Assuming that the target attribute is an outbound interface, the network device classifies found routing entries into three groups: a group 1, a group 2, and a group 3 based on outbound interfaces in step 303. If an identifier of an outbound interface corresponding to the group 1 is "E0", an identifier of an outbound interface corresponding to the group 2 is "E1", and an identifier of an outbound interface corresponding to the group 3 is "E2", the network device may generate the query response based on "E0", "E1", and "E2". Correspondingly, the query response may include "E0", "E1", and "E2".

In another example scenario, for example, the query object is a routing entry. Assuming that the target attribute is a routing protocol, the network device classifies found routing entries into four groups: a group 1, a group 2, a group 3, and a group 4 based on routing protocols in step 303. If an identifier of a routing protocol corresponding to the group 1 is "Static", an identifier of a routing protocol corresponding to the group 2 is "OSPF", an identifier of a routing protocol corresponding to the group 3 is "RIP", and an identifier of a routing protocol corresponding to the group 4 is "BGP", the network device may generate the query response based on "Static", "OSPF", "RIP", and "BGP". Correspondingly, the query response may include "Static", "OSPF", "RIP", and "BGP".

In another example scenario, the query object is a security policy. Assuming that the target attribute is behavior performed on traffic, the network device classifies found security policies into two groups: a group 1 and a group 2 based on behavior in step 303. If an identifier of behavior corresponding to the group 1 is "permit", and an identifier of behavior corresponding to the group 2 is "deny", the network device may generate the query response based on "permit" and "deny". Correspondingly, the query response may include "permit" and "deny".

For example, the query response may be shown below, where "vsys.static-policy" represents the query object, the query object is indicated by "<filter type="subtree">", and "action" represents the target attribute.

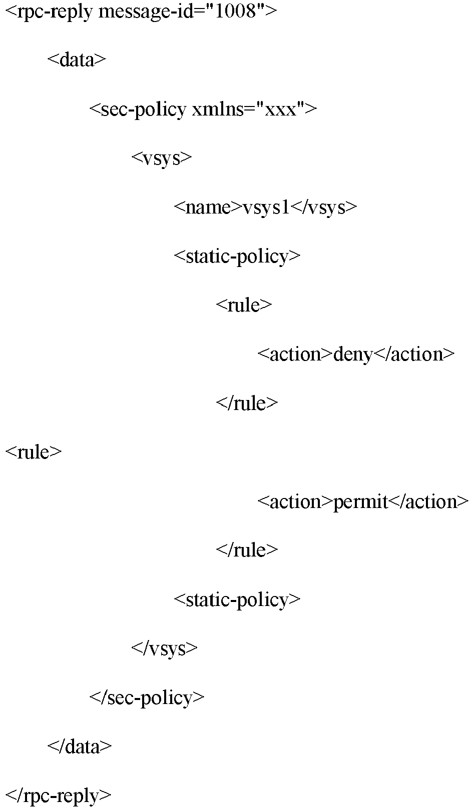

In the query response, a program statement in the first line is a start tag and means that an ID of the RPC-reply message is "1008". A program statement in the second line is a start tag and means that content of the message starts from a next line of this line. A program statement in the third line is a start tag and means to output a child node of a "sec-policy" node in "xxx" namespace. A program statement in the fourth line is a start tag. A program statement in the fifth line is a start label and indicates that a name of a node is "vsys1". A program statement in the sixth line is a start tag and indicates a child node "static-policy" of the node "vsys1". A program statement in the seventh line to a program statement in the ninth line correspond to one group. The program statement in the seventh line is a start tag and means a "rule" child node of the "sec-policy" node. The program statement in the eighth line means that the target attribute is "action", and a value of "action" corresponding to this group is "deny". The program statement in the ninth line is an end tag corresponding to the program statement in the seventh line. A program statement in the tenth line to a program statement in the twelfth line correspond to another group. The program statement in the tenth line is a start tag and means the "rule" child node of the "sec-policy" node. The program statement in the eleventh line means that the target attribute is "action", and a value of "action" corresponding to this group is "permit". The program statement in the twelfth line is an end tag corresponding to the program statement in the tenth line. A program statement in the thirteenth line is an end tag corresponding to the program statement in the sixth line, and a program statement in the fourteenth line is an end tag corresponding to the program statement in the fourth line. A program statement in the fifteenth line is an end tag corresponding to the program statement in the third line. A program statement in the sixteenth line is an end tag corresponding to the program statement in the second line. A program statement in the seventeenth line is an end tag corresponding to the program statement in the first line.

305. The network device sends the query response to the network management device.

306. The network management device receives the query response from the network device.

After receiving the query response, the network management device may obtain, based on the query response, the value of the target attribute corresponding to each of the at least one group. The network management device may perform a subsequent operation based on the value of the target attribute corresponding to each of the at least one group, for example, output the value of the target attribute corresponding to each group, for another example, display the value of the target attribute corresponding to each group on an interface, or for another example, perform further statistical analysis on the value of the target attribute corresponding to each group.

In the method provided in FIG. 3, the network device groups the information of the query object based on the first keyword and the target attribute in the query request, and generates the query response based on the group obtained through the grouping. In comparison with the prior art in which a query response carries all information related to a query item, in this embodiment, the network device groups the information, so that an amount of data that needs to be transmitted is reduced, thereby reducing communication time, saving resources of the network device and the network management device, and improving processing efficiency of the network device and the network management device. Further, the grouping is performed by the network device, so that software implementation of the network management device is simplified, and memory overheads of the network management device for performing the grouping are reduced, thereby improving running performance of network management software.

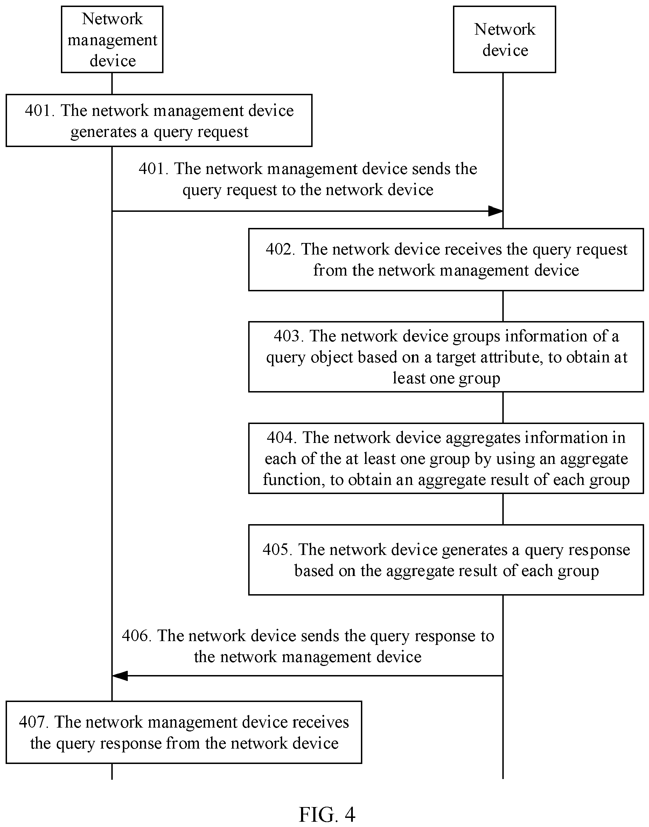

In a possible implementation, the process of generating the query response based on the at least one group may be implemented in another manner. For details, refer to the following embodiment in FIG. 4. It should be noted that the embodiment in FIG. 4 focuses on describing a difference from the embodiment in FIG. 3. For steps similar to those in the embodiment in FIG. 3, refer to the embodiment in FIG. 3. Details are not described in the embodiment in FIG. 4.

FIG. 4 is a flowchart of an information query method according to an embodiment of this application. As shown in FIG. 4, the method includes steps 401 to 407 that are interactively performed by a network management device and a network device.

401. The network management device generates a query request, and the network management device sends the query request to the network device.

Optionally, the query request further includes a second keyword. A form of the second keyword may be any one or a combination of a character, a digit, and a letter. For example, the second keyword may be "select" or a value. The second keyword is used to indicate an aggregate function.

The aggregate function is used to perform calculation on information in each group and return an aggregate result. Specifically, the aggregate function may include at least one of a count statistics (count) function, a maximum value (max) function, a minimum value (min) function, an average value (avg) function, a sum function, a variance function, and a standard deviation (stdev) function. The count function is used to generate a quantity of pieces of information in a group. The maximum value function is used to generate a maximum value of information in a group. The average value function is used to generate a minimum value of information in a group. The summation function is used to generate a sum of information in a group. The variance function is used to generate a variance of information in a group. The standard deviation function is used to generate a standard deviation of information in a group.

The aggregate function may be represented by using an identifier of the aggregate function. The identifier of the aggregate function is used to uniquely determine the corresponding aggregate function. Specifically, the identifier of the aggregate function may be a name, an abbreviation, a serial number, an ID, or the like of the aggregate function. For example, an identifier of the count function may be count, an identifier of the maximum value function may be max, an identifier of the minimum value function may be min, an identifier of the average value function may be avg, an identifier of the summation function may be sum, an identifier of the variance function may be var, and an identifier of the standard deviation function may be stdev. Certainly, the identifier of the aggregate function may be alternatively any identifier pre-agreed on between the network management device and the network device. For example, the network management device and the network device may agree in advance that "0" is the identifier of the count function, and if the query request includes "0", it indicates that the aggregate function is the count function. Similarly, the network management device and the network device may agree in advance that "1" is the identifier of the maximum value function, "2" is the identifier of the minimum value function, and by analogy.

The second keyword indicates the identifier of the aggregate function in the query request, and the second keyword may indicate a location of the identifier of the aggregate function in the query request. In an example in which the query request is a packet in an XML format, the second keyword may correspond to a node in the packet in the XML format, the node is used to store the identifier of the aggregate function, and the second keyword may be content included in a start tag and/or an end tag of the node, or may be content included between the start tag and the end tag of the node. Optionally, the node may not only store the identifier of the aggregate function, but also store a target attribute.

For example, content of the query request may be shown below. Different from the query request shown in the embodiment in FIG. 3, the query request further includes a program statement "<select>vsys.static-policy.rule.action, count</select>", where "select" represents the second keyword and is content included in a start tag <select> and an end tag </select>, and "count" is the identifier of the count function. A previous line of program statement is associated with this line of program statement, and the previous line of program statement means that information in vsys.static-policy.rule is grouped based on an attribute "action", and this line of program statement is to obtain, by using the count function, a quantity of pieces of information in each group obtained through grouping, and use the quantity as an aggregate result of each group.

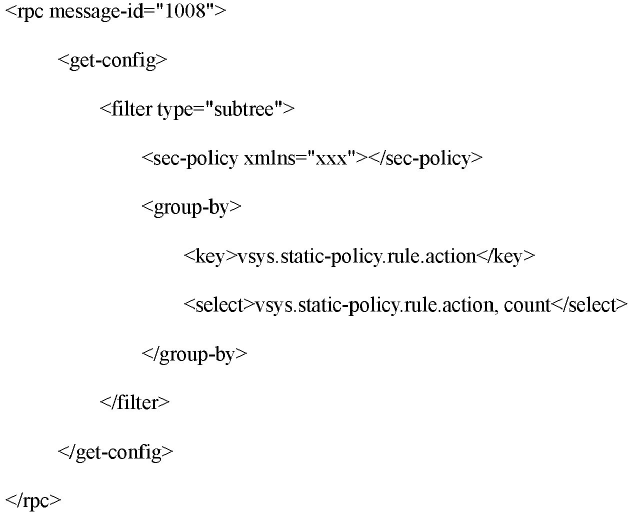

An example in which a node corresponding to a query object is referred to as a first node, a node corresponding to a first keyword is referred to as a second node, a node corresponding to the target attribute is referred to as a third node, and a node corresponding to the aggregate function is referred to as a fourth node is used to describe a logical relationship between the fourth node, and the first node, the second node, and the third node. In a possible implementation, the fourth node may be a child node of the first node, a child node of the second node, and a brother node of the third node. For example, in the query request shown above, a select node is a child node of a filter node, a child node of a group-by node, and a brother node of a key node. Certainly, the logical relationship between the nodes is merely an example for description. There may be another logical relationship between the fourth node, and the first node, the second node, and the third node. For example, the fourth node may be a brother node of the second node. A logical relationship between different nodes in the query request is not specifically limited in this embodiment.

Optionally, the second keyword may instruct the network device whether to aggregate information in each of at least one group after the network device groups information of the query object. Specifically, if the query request includes the second keyword, the query request instructs the network device to aggregate the information in each of the at least one group and then return an aggregate result. If the query request does not include the second keyword, the query request instructs the network device to group the information of the query object and then return a grouping result.

402. The network device receives the query request from the network management device.

After receiving the query request, the network device may determine the aggregate function based on the query request. In a possible implementation, the network device may parse the query request to obtain the second keyword, and determine the aggregate function based on the second keyword in the query request, to perform the following step 404 based on the aggregate function. Specifically, the network device may obtain the identifier of the aggregate function from the query request based on the second keyword, and determine the corresponding aggregate function based on the identifier of the aggregate function. The network device may prestore the aggregate function, and call, based on the identifier of the aggregate function, the aggregate function stored in the network device, to perform the following step 404.

For example, assuming that the query request is shown in step 401, the network device may parse <select>vsys.static-policy.rule.action, count</select> to obtain the second keyword "select", obtain the identifier "count" of the count function from the query request based on the second keyword "select", and call the count function corresponding to "count", to perform the following step 404 by using the count function.

403. The network device groups the information of the query object based on the target attribute, to obtain the at least one group.

404. The network device aggregates the information in each of the at least one group by using the aggregate function, to obtain the aggregate result of each group.

For each of the at least one group, the network device may call the aggregate function, input information in a group into the aggregate function, and output an aggregate result of the group. An aggregate result may be in a one-to-one correspondence with a group. For example, assuming that the network device obtains N groups through classification, after information in an i^{th} group in the N groups is aggregated, an aggregate result of the i^{th} group may be obtained, and finally N aggregate results are obtained. N and i are positive integers, and i is less than or equal to N.

The aggregate result may include any one or a combination of a quantity, a maximum value, a minimum value, an average value, a sum, a variance, and a standard deviation. Correspondingly, the step of obtaining the aggregate result of each group includes but is not limited to any one or a combination of the following (1) to (7).
(1) A quantity of pieces of information in each group is obtained by using the count function, and the quantity is used as the aggregate result of each group.

In an example scenario, for example, the query object is a routing entry, and the target attribute is an outbound interface. It is assumed that in step 403, when grouping routing entries based on outbound interfaces, the network device classifies a routing entry whose identifier of an outbound interface is "E0" into a group 1, classifies a routing entry whose identifier of an outbound interface is "E1" into a group 2, and classifies a routing entry whose identifier of an outbound interface is "E2" into a group 3. In this case, the network device may obtain a quantity of routing entries in each of the three groups by using the count function in this step. For example, if an obtained quantity of routing entries in the group 1 is m1, an obtained quantity of routing entries in the group 2 is m2, and an obtained quantity of routing entries in the group 3 is m3, an aggregate result of the group 1 is m1, an aggregate result of the group 2 is m2, and an aggregate result of the group 3 is m3, where m1, m2, and m3 are positive integers.

In another example scenario, for example, the query object is a security policy, and the target attribute is behavior performed on traffic. It is assumed that in step 403, when grouping security policies based on behavior performed on traffic, the network device classifies a security policy whose identifier of behavior is "permit" into a group 1, and classifies a security policy whose identifier of behavior is "deny" into a group 2. In this case, the network device may obtain a quantity of security policies in each of the two groups by using the count function in this step. For example, if an obtained quantity of security policies in the group 1 is k1, and an obtained quantity of security policies in the group 2 is k2, an aggregate result of the group 1 is k1, and an aggregate result of the group 2 is k2, where k1 and k2 are positive integers.
(2) A maximum value of information in each group is obtained by using the maximum value function, and the maximum value is used as the aggregate result of each group.
(3) A minimum value of information in each group is obtained by using the minimum value function, and the minimum value is used as the aggregate result of each group.
(4) An average value of information in each group is obtained by using the average value function, and the average value is used as the aggregate result of each group.
(5) A sum of information in each group is obtained by using the summation function, and the sum is used as the aggregate result of each group.
(6) The variance of information in each group is obtained by using the variance function, and the variance is used as the aggregate result of each group.
(7) A standard deviation of information in each group is obtained by using the standard deviation function, and the standard deviation is used as the aggregate result of each group.

It should be noted that, the foregoing (1) to (7) may be selectively performed, or may be performed in combination. If (1) to (7) are performed in combination, the network device may separately aggregate the information in each of the at least one group by using a plurality of aggregate functions, to obtain the aggregate result of each group. For example, the foregoing (1) and the foregoing (2) are performed in combination. The network device may obtain the quantity of pieces of information in each group by using the count function, obtain the maximum value of information in each group by using the maximum value function, and use the quantity of pieces of information in each group and the maximum value of information in each group as the aggregate result of each group.

405. The network device generates a query response based on the aggregate result of each group, where the query response includes the aggregate result of each of the at least one group.

In an example scenario, for example, the query object is a routing entry. Assuming that the target attribute is an outbound interface, the network device classifies found routing entries into three groups: a group 1, a group 2, and a group 3 based on outbound interfaces in step 403. If an aggregate result of the group 1 is m1, an aggregate result of the group 2 is m2, and an aggregate result of the group 3 is m3, the network device may generate the query response based on m1, m2, and m3. Correspondingly, the query response may include m1, m2, and m3.

In another example scenario, the query object is a security policy. Assuming that the target attribute is behavior performed on traffic, the network device classifies information about found security policies into two groups: a group 1 and a group 2 based on behavior in step 403. If an aggregate result of the group 1 is k1, and an aggregate result of the group 2 is k2, the network device may generate the query response based on k1 and k2. Correspondingly, the query response may include k1 and k2.

Optionally, in combination with the foregoing embodiment in FIG. 3, the network device may generate the query response based on the aggregate result of each group and a value of a target attribute corresponding to each group. Correspondingly, the query response includes the value of the target attribute corresponding to each of the at least one group and the aggregate result of each of the at least one group.

In an example scenario, for example, the query object is a routing entry. Assuming that the target attribute is an outbound interface, the network device classifies found routing entries into three groups: a group 1, a group 2, and a group 3 based on outbound interfaces in step 403. An identifier of an outbound interface corresponding to the group 1 is "E0", and an aggregate result of the group 1 is m1; an identifier of an outbound interface corresponding to the group 2 is "E1", and an aggregate result of the group 2 is m2; and an identifier of an outbound interface corresponding to the group 3 is "E2", and an aggregate result of the group 3 is m3. In this case, the network device may generate the query response based on "E0", m1, "E1", m2, "E2", and m3. Correspondingly, the query response may include "E0", m1, "E1", m2, "E2", and m3.

In another example scenario, the query object is a security policy. Assuming that the target attribute is behavior performed on traffic, the network device classifies found security policies into two groups: a group 1 and a group 2 based on behavior in step 403. An identifier of behavior corresponding to the group 1 is "permit", and an aggregate result of the group 1 is k1; and an identifier of behavior corresponding to the group 2 is "deny", and an aggregate result of the group 2 is k2. In this case, the network device may generate the query response based on "permit", k1, "deny", and k2. Correspondingly, the query response may include "permit", k1, "deny", and k2.

For example, the query response may be shown below. Different from the foregoing embodiment in FIG. 3, the query response further includes a program statement <count>9</count> and a program statement <count>12</count>, where "count" is the identifier of the quantity statistics function. For this line of program statement <count>9</count>, a previous line of program statement is associated with this line of program statement, the previous line of program statement means that a value of "action" corresponding to this group is "deny", and this line of program statement means that a quantity of security policies (rules) in the group corresponding to "deny" is 9. For this line of program statement <count>12</count>, a previous line of program statement is associated with this line of program statement, the previous line of program statement means that a value of "action" corresponding to this group is "permit", and this line of program statement means that a quantity of rules in the group corresponding to "permit" is 12.

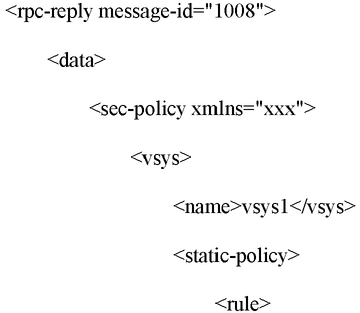

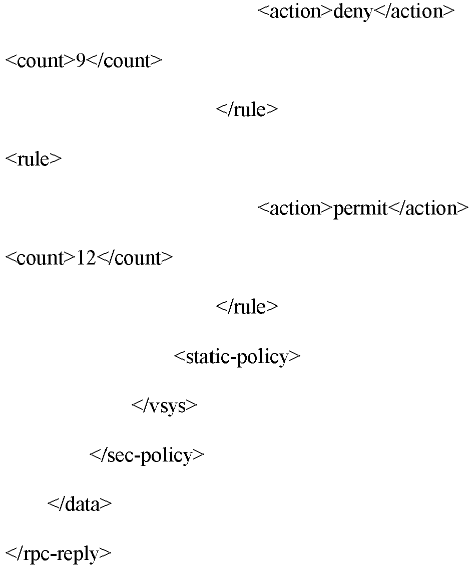

406. The network device sends the query response to the network management device.

407. The network management device receives the query response from the network device.

After receiving the query response, the network management device may obtain the aggregate result of each of the at least one group based on the query response, and the network management device may perform a subsequent operation based on the aggregate result of each group, for example, output the aggregate result of each group, for another example, display the aggregate result of each group on an interface, or for another example, perform further statistical analysis on the aggregate result of each group.

In the manner shown in FIG. 4, the network device groups the information of the query object based on the target attribute in the query request, aggregates the information in each group, and generates the query response based on the aggregate result of each group. In comparison with the prior art in which a query response carries all information related to a query item, in the grouping and aggregation processes, an amount of data that needs to be transmitted by the network device is reduced, resources of the network device and the network management device are saved, and processing efficiency of the network device and the network management device is improved. Further, the grouping and the aggregation are performed by the network device, so that software implementation of the network management device is simplified, and memory overheads of the network management device for performing the grouping and the aggregation are reduced, thereby improving running performance of network management software.

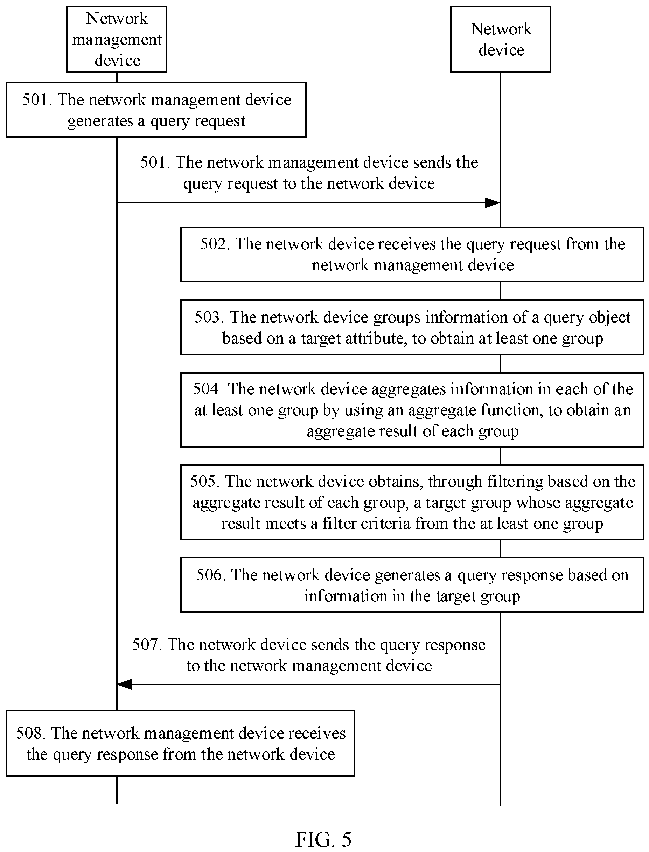

Optionally, a grouping query function is implemented by using the foregoing embodiment in FIG. 3, and a filtering function may be further implemented by using the following embodiment in FIG. 5 on the basis of implementing an aggregation function by using the embodiment in FIG. 4. It should be noted that the embodiment in FIG. 5 focuses on describing a difference from the embodiment in FIG. 3 and the embodiment in FIG. 4. For steps similar to those in the embodiment in FIG. 3 and the embodiment in FIG. 4, refer to the embodiment in FIG. 3 and the embodiment in FIG. 4. Details are not described in the embodiment in FIG. 5.

FIG. 5 is a flowchart of an information query method according to an embodiment of this application. As shown in FIG. 5, the method includes steps 501 to 508 that are interactively performed by a network management device and a network device.

501. The network management device generates a query request, and the network management device sends the query request to the network device.

Optionally, the query request further includes a filter criteria. The filter criteria is used to select, from at least one group obtained through grouping, a target group whose aggregate result meets the filter criteria. The filter criteria may be used to limit a value range of the aggregate result. For example, if the filter criteria may be that the aggregate result is within a target value range, the filter criteria may be used to select a target group whose aggregate result is within the target value range. For example, assuming that the filter criteria is that the aggregate result is greater than a threshold, the filter criteria may be used to select a target group whose aggregate result is greater than the threshold. The filter criteria may be specifically determined based on a requirement of a statistical scenario, and the filter criteria is not limited in this embodiment.

Optionally, the query request may include a filter command, for example, "having", and the filter criteria is indicated by "having". Specifically, "having" may indicate a location of the filter criteria in the query request. In an example in which the query request is a packet in an XML format, "having" may correspond to a node in the packet in the XML format, the node is used to store the filter criteria, and "having" may be content included in a start tag and/or an end tag of the node, or may be content included between the start tag and the end tag of the node.

For example, content of the query request may be shown below. A difference from the query request shown in the embodiment in FIG. 4 lies in that the query request further includes a program statement "<having>count > 10</having>", where "count > 10" represents the filter criteria and means that a count value (the count value is a quantity obtained through calculation by using a count function) is greater than 10. A previous line of program statement is associated with this line of program statement, the previous line of program statement means to obtain, by using the count function, a quantity of pieces of information in each group obtained through grouping, and use the quantity as an aggregate result of each group, and this line of program statement means to select a target group in which a quantity is greater than 10 from all groups, and return information in the target group.

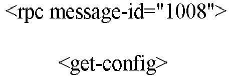

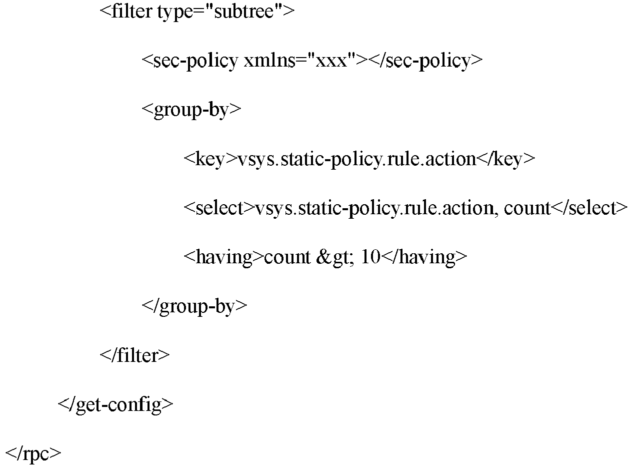

An example in which a node corresponding to a query object is referred to as a first node, a node corresponding to a first keyword is referred to as a second node, a node corresponding to a target attribute is referred to as a third node, a node corresponding to an aggregate function is referred to as a fourth node, and a node corresponding to the filter criteria is referred to as a fifth node is used to describe a logical relationship between the fifth node, and the first node, the second node, the third node, and the fourth node. In a possible implementation, the fifth node may be a child node of the first node, a child node of the second node, a brother node of the third node, and a brother node of the fourth node. For example, in the query request shown above, a having node is a child node of a filter node, a child node of a group-by node, a brother node of a key node, and a brother node of a select node. Certainly, the logical relationship between the nodes is merely an example for description. There may be another logical relationship between the fifth node, and the first node, the second node, the third node, and the fourth node. For example, the fifth node may be a brother node of the second node. A logical relationship between different nodes in the query request is not limited in this embodiment.

502. The network device receives the query request from the network management device.

After receiving the query request, the network device may determine the filter criteria based on the query request. In a possible implementation, the network device may determine the filter criteria based on "having" in the query request. For example, assuming that the query request is shown in step 501, the network device may determine content between <having> and </having> as the filter criteria, for example, determine, based on this line of program statement <having>count > 10</having>, that the filter criteria is "count > 10", that is, a quantity is greater than 10.

503. The network device groups information of the query object based on the target attribute, to obtain the at least one group.

504. The network device aggregates information in each of the at least one group by using the aggregate function, to obtain the aggregate result of each group.

505. The network device obtains, through filtering based on the aggregate result of each group, the target group whose aggregate result meets the filter criteria from the at least one group.

For each of the at least one group, the network device may determine, based on an aggregate result of a group and the filter criteria, whether the aggregate result of the group meets the filter criteria. When the aggregate result of the group meets the filter criteria, the group is used as a target group, thereby obtaining the target group through filtering. When the aggregate result of the group does not meet the filter criteria, it may be further determined whether a next group is a target group.

For example, it is assumed that the filter criteria is that a quantity of pieces of information is greater than 10, and the network device obtains two groups: a group 1 and a group 2 through classification in step 503. A quantity of pieces of information in the group 1 is 9, and a quantity of pieces of information in the group 2 is 12. The quantity of pieces of information in the group 1 is not greater than 10, and the quantity of pieces of information in the group 1 does not meet the filter criteria. Therefore, the group 1 is not a target group. The quantity of pieces of information in the group 2 is greater than 10, and the quantity of pieces of information in the group 2 meets the filter criteria. Therefore, the group 2 is a target group.

506. The network device generates a query response based on information in the target group.

The information in the target group may include at least one of an aggregate result of the target group, a value of a target attribute of a data object in the target group, and a value of each attribute of the data object in the target group. Correspondingly, step 506 includes but is not limited to any one or a combination of the following implementations 1 and 2.

Implementation 1: The query response is generated based on the aggregate result of the target group and the value of the target attribute of the data object in the target group.

The data object is a data entity in the target group, and may be considered as a data unit of the target group. The target group may include one or more data objects. For example, assuming that the target group includes at least one security policy, one security policy is one data object. For another example, assuming that the target group includes at least one routing entry, one routing entry is one data object.

If the target group includes one data object, the implementation 1 may include: generating the query response based on the aggregate result of the target group and a value of a target attribute of the data object in the target group. If the target group includes a plurality of data objects, the implementation 1 may include: generating the query response based on the aggregate result of the target group and a value of a target attribute of each of the plurality of data objects in the target group. The value of the target attribute of the data object in the target group may be a value of a target attribute corresponding to the target group.

In the implementation 1, the query response may include the aggregate result of the target group and the value of the target attribute of the data object in the target group. For example, it is assumed that the network device classifies found security policies into two groups: a group 1 and a group 2 based on a target attribute "behavior". An identifier of behavior corresponding to the group 1 is "permit", and an identifier of behavior corresponding to the group 2 is "deny". Assuming that a quantity of pieces of information in the group 1 is 9, and a quantity of pieces of information in the group 2 is 12, it is learned that an aggregate result of the group 1 is 9 and an aggregate result of the group 2 is 12 by using the count function. Assuming that the filter criteria is that a quantity of pieces of information is greater than 10, it is learned, through filtering, that the target group is the group 2 based on the quantity of pieces of information in the group 1 and the quantity of pieces of information in the group 2. In this case, the query response may be generated based on "12" and "deny", where the query response includes "12" and "deny".

For example, assuming that the query request is shown in step 501, and the filter criteria is that a quantity of pieces of information is greater than 10, a difference between the query response in the implementation 1 of step 506 and the query response in the foregoing embodiment in FIG. 4 lies in that the following four lines of program statements are filtered out in the query response in the implementation 1 of step 506:

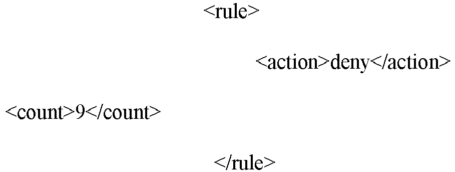

Specifically, for the group in which the quantity of pieces of information is 9, the group is filtered out because the quantity of pieces of information in the group does not meet the filter criteria. Correspondingly, the aggregate result corresponding to the group and a value of a target attribute corresponding to the group do not appear in the query response, and are not returned to the network management device. However, for the group in which the quantity of pieces of information is 12, the group is used as a target group and is returned to the network management device because the quantity of pieces of information in the group meets the filter criteria. Therefore, the query response in the implementation 1 of step 506 is shown below.

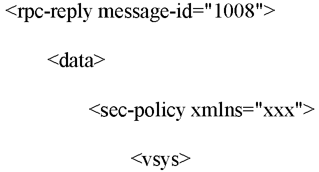

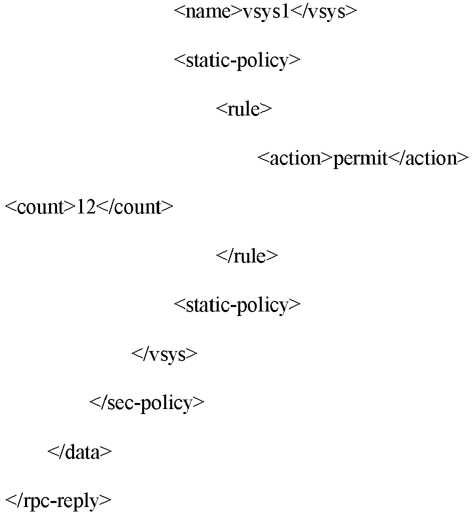

Implementation 2: The query response is generated based on the value of each attribute of the data object in the target group.

In the implementation 2, the query response may be generated not only based on the value of the target attribute of the data object in the target group, but also based on a value of an attribute other than the target attribute of the data object in the target group. In this case, if the data object has a plurality of attributes, the query response may be generated based on a value of each of the plurality of attributes of the data object in the target group. Correspondingly, the query response may include the value of each of the plurality of attributes of the data object in the target group.

If the target group includes a plurality of data objects, the query response may be generated based on a value of each attribute of each of the plurality of data objects in the target group. Correspondingly, the query response may include the value of each attribute of each of the plurality of data objects in the target group. Values of a same attribute of different data objects in the target group may be different or the same. This is not limited in this embodiment.

In an example scenario, it is assumed that routing entries are grouped based on outbound interfaces to obtain at least one group, and a target group is obtained through filtering based on the filter criteria. The query response may be generated based on a value of a destination IP address, a value of a subnet mask, an identifier of a routing protocol, a value of a routing overhead, a value of a next-hop IP address, an identifier of an outbound interface, and a value of a route priority in a routing entry in the target group. The query response includes the value of the destination IP address, the value of the subnet mask, the identifier of the routing protocol, the value of the routing overhead, the value of the next-hop IP address, the identifier of the outbound interface, and the value of the route priority in the routing entry in the target group.

In another example scenario, it is assumed that security policies are grouped based on actions to obtain at least one group, and a target group is obtained through filtering based on the filter criteria. The query response may be generated based on an identifier of a source security zone, an identifier of a destination security zone, a value of a source IP address, a value of a destination IP address, an identifier of behavior, and an identifier of a service type in the target group. The query response includes the identifier of the source security zone, the identifier of the destination security zone, the value of the source IP address, the value of the destination IP address, the identifier of the behavior, and the identifier of the service type.

For example, assuming that the query request is shown in step 501, a difference between the query response in the implementation 2 of step 506 and the query response in the implementation 1 of step 506 lies in that, in the query response in the implementation 2, any data object further corresponds to at least the following program statement:

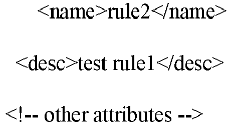

Specifically, for a data object "rule2", rule2 not only has a target attribute "action", but also includes a name (name), a destination IP address (desc), and other attributes. The query response may include values of the other attributes of rule2. In addition, in the query response in the implementation 2, if the target group includes a plurality of data objects "rules", the query response in the implementation 2 of step 506 further corresponds to at least the following program statement:

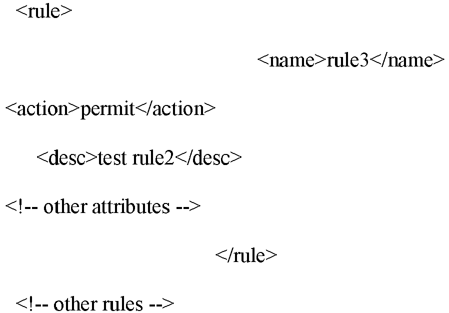

Specifically, if the target group includes a data object "rule2" and a data object "rule3", the query object may include values of all attributes of the data object "rule2" and the data object "rule3", where values of actions (action) of the data object "rule2" and the data object "rule3" are the same, but names (name), destination IP addresses (desc), and values of other attributes may be the same or different.

In view of the above, for example, the query response in step 506 may be shown below.

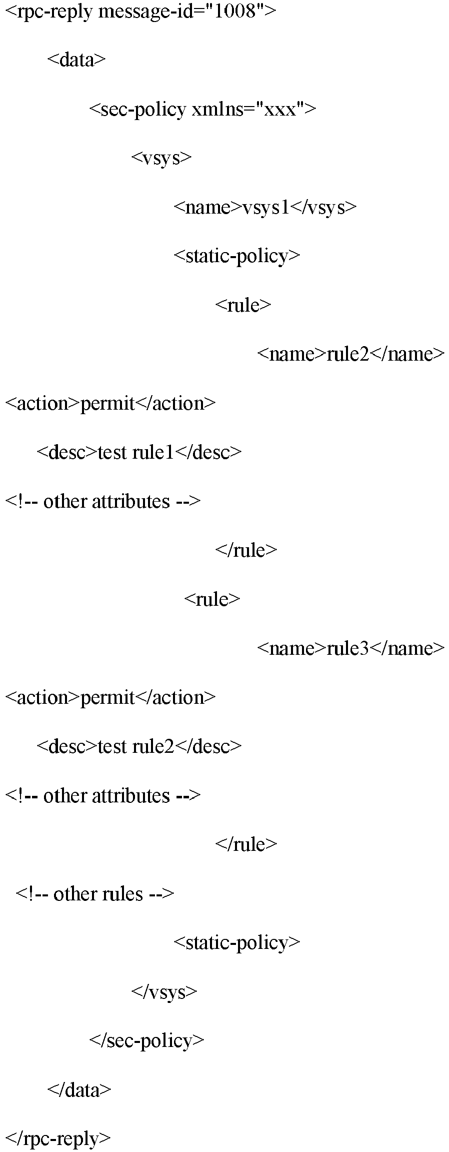

Optionally, the query request may instruct, by using a setting command such as "origin (origin)", the network device to perform the foregoing implementation 1 or the foregoing implementation 2, where origin may specify whether to return a value of an original attribute of a data object in each group, and the original attribute is each attribute of the data object.

In a possible implementation, if the query request includes "origin", and a value of "origin" is a first value, the network device performs the implementation 1; or if the query request includes "origin", and a value of "origin" is a second value, the network device performs the implementation 2. The first value and the second value may be any two different values. For example, the first value may be false (false), and the second value may be true (true). For another example, the first value may be N, and the second value may be Y. For another example, the first value may be 0, and the second value may be 1.

In another possible implementation, if the query request does not include "origin", the network device performs the foregoing implementation 1; or if the query request includes "origin", the network device performs the foregoing implementation 2.

For example, content of the query request may be shown below. Different from the query request shown in the embodiment in FIG. 4, the query request further includes a program statement "<origin>true</origin>", meaning to return the value of each attribute of the data object in the target group.

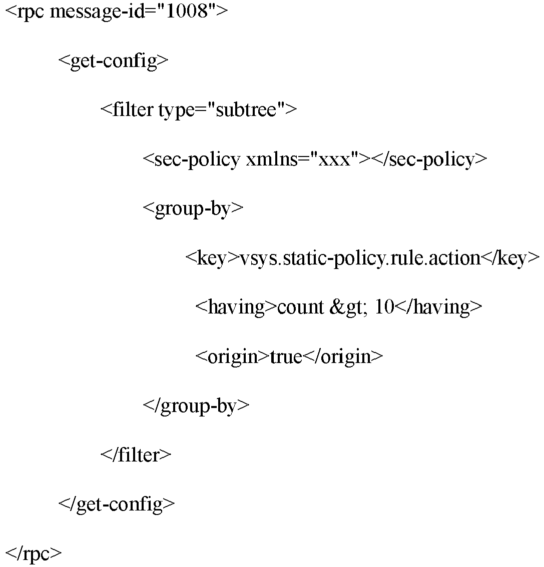

It should be noted that, that "origin" in the query request is used to instruct the network device to perform the foregoing implementation 1 or the foregoing implementation 2 is merely an example for description, and "origin" may be equivalently replaced with any other identifier. This is not limited in this embodiment.

507. The network device sends the query response to the network management device.

508. The network management device receives the query response from the network device.

After receiving the query response, the network management device may obtain the information in the target group based on the query response. The network management device may perform a subsequent operation based on the information in the target group, for example, output the information in the target group, for another example, display the information in the target group on an interface, or for another example, perform further statistical analysis on the information in the target group.

In the implementation shown in FIG. 5, the network device groups the information of the query object based on the target attribute in the query request, aggregates the information in each group, obtains, through filtering based on the aggregate result of each group, the target group whose aggregate result meets the filter criteria from the at least one group, and generates the query response based on the information in the target group. In comparison with the prior art in which a query response carries all information related to a query item, in the grouping, aggregation, and filtering processes in the foregoing implementation, an amount of data that needs to be transmitted is reduced, resources of the network device and the network management device are saved, and processing efficiency of the network device and the network management device is improved. Further, the grouping, the aggregation, and the filtering are performed by the network device, so that software implementation of the network management device is simplified, and memory overheads of the network management device for performing the steps of grouping, aggregation, and filtering are reduced, thereby improving running performance of network management software.

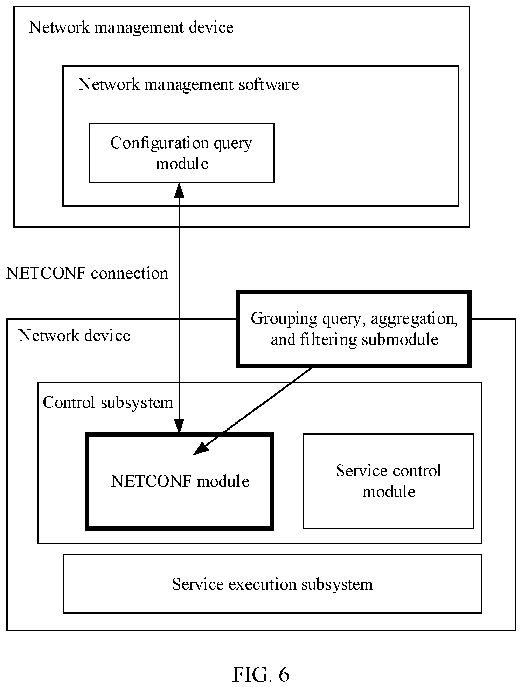

With reference to the foregoing embodiment in FIG. 3, the foregoing embodiment in FIG. 4, and the foregoing embodiment in FIG. 5, an embodiment of this application further provides a logical architecture of a network device and a network management device shown in FIG. 6. Referring to FIG. 6, network management software runs on the network management device, and the network management software includes a configuration query module. The network device includes a control subsystem and a service execution subsystem. The control subsystem includes a NETCONF module and a service control module. A NETCONF connection may be established between the NETCONF module and the configuration query module of the network management device, and the NETCONF module may communicate with the configuration query module based on the NETCONF connection.

In an information query process, the NETCONF module is configured to: receive configuration data sent by the network management device based on the NETCONF protocol, and send the configuration data to the service control module. After receiving the configuration data sent by the NETCONF module, the service control module sets the configuration data in the service execution subsystem, and the service execution subsystem executes a service based on the configuration data.

In this embodiment, a "grouping query, aggregation, and filtering" submodule may be added to the NETCONF module of the network device, and the NETCONF module may invoke the "grouping query, aggregation, and filtering" submodule to perform any one or more of the foregoing step 303, step 403, step 404, step 503, step 504, and step 505.

The "grouping query, aggregation, and filtering" submodule may be a software module that performs a corresponding function in software, that is, the "grouping query, aggregation, and filtering" submodule may be a function module formed by a group of computer programs. The computer program may be a source program or a target program, and the computer program may be implemented by using any programming language. By using the foregoing modules, the network device may implement an information query function based on hardware including a processor and a memory. That is, the processor of the network device may run software code stored in the memory of the network device, to execute corresponding software, so as to implement the information query function.

All the foregoing optional technical solutions may be randomly combined to form optional embodiments of this application, and details are not described again herein.

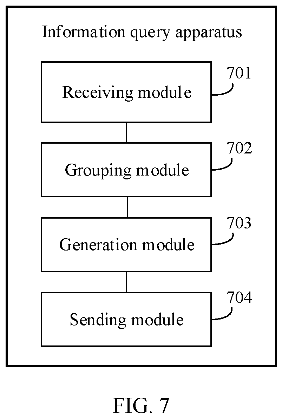

FIG. 7 is a schematic structural diagram of an information query apparatus according to an embodiment of this application. As shown in FIG. 7, the apparatus includes:
a receiving module 701, configured to perform any one or more of the foregoing step 302, step 402, and step 502;
a grouping module 702, configured to perform any one or more of the foregoing step 303, step 403, and step 503;
a generation module 703, configured to perform any one or more of the foregoing step 304, step 405, and step 506; and
a sending module 704, configured to perform any one or more of the foregoing step 305, step 406, and step 507.

Optionally, the grouping module 702 includes:
an obtaining submodule, configured to perform step 1 in the foregoing step 303; and
a grouping submodule, configured to perform step 2 in the foregoing step 303.

Optionally, the generation module 703 is configured to perform the foregoing step 404.

Optionally, the generation module is configured to perform any one or a combination of (1) to (7) in the foregoing step 404.

Optionally, the query request further includes a second keyword, and the second keyword is used to indicate an aggregate function. Correspondingly, the apparatus further includes:
a determining module, configured to determine the aggregate function based on the second keyword.

Optionally, the generation module 703 is configured to perform the foregoing step 505 and step 506.

Optionally, the query request further includes a filter criteria.

Optionally, the generation module 703 is configured to perform at least one of the implementation 1 and the implementation 2 in the foregoing step 506.

Optionally, a query response includes a value of a target attribute corresponding to each group and/or an aggregate result of each group.

It should be noted that the UE provided in the foregoing embodiments is described only using division of the foregoing functional modules. In practice, the functions may be allocated to different functional modules for implementation as required. To be specific, an internal structure of an apparatus is divided into different functional modules to implement all or part of the functions described above. In addition, the information query apparatus provided in the foregoing embodiment and the embodiment of the information query method pertain to a same concept. For a specific implementation process of the information query apparatus, refer to the method embodiment. Details are not described herein again.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer program instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired or wireless manner. The computer storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD), a semiconductor medium (for example, a solid-state drive), or the like.

The term "and/or" in this application describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

The term "a plurality of' in this application means two or more. For example, a plurality of data packets are two or more data packets.

Words such as "first" and "second" in this application are used to distinguish between same items or similar items with basically same purposes and functions. A person skilled in the art may understand that the words such as "first" and "second" do not limit a quantity and an execution sequence.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely optional embodiments of this application, but are not intended to limit this application. Any modification, equivalent replacement, or improvement made without departing from the principle of this application should fall within the protection scope of this application.

## Claims

1. An information query method, wherein the method comprises:
receiving a query request from a network management device, wherein the query request comprises a query object, a target attribute, and a first keyword, the first keyword is used to instruct a network device to group information of the query object, and the target attribute is an attribute based on which the grouping is performed;
grouping the information of the query object based on the target attribute to obtain at least one group;
generating a query response based on the at least one group; and
sending the query response to the network management device.

2. The method according to claim 1, wherein the grouping the information of the query object based on the target attribute to obtain at least one group comprises:
obtaining at least one value of the target attribute; and
grouping the information of the query object based on the at least one value to obtain the at least one group, wherein each value corresponds to one group.

3. The method according to claim 1 or 2, wherein the generating a query response based on the at least one group comprises:
aggregating information in each of the at least one group by using an aggregate function, to obtain an aggregate result of each group; and generating the query response based on the aggregate result of each group; or
generating the query response based on a value of a target attribute corresponding to each of the at least one group.

4. The method according to claim 3, wherein the aggregating information in each of the at least one group by using an aggregate function, to obtain an aggregate result of each group comprises any one of the following:
obtaining a quantity of pieces of information in each group by using a quantity statistics function, and using the quantity as the aggregate result of each group;
obtaining a maximum value of information in each group by using a maximum value function, and using the maximum value as the aggregate result of each group;
obtaining a minimum value of information in each group by using a minimum value function, and using the minimum value as the aggregate result of each group;
obtaining an average value of information in each group by using an average value function, and using the average value as the aggregate result of each group;
obtaining a sum of information in each group by using a summation function, and using the sum as the aggregate result of each group;
obtaining a variance of information in each group by using a variance function, and using the variance as the aggregate result of each group; and
obtaining a standard deviation of information in each group by using a standard deviation function, and using the standard deviation as the aggregate result of each group.

5. The method according to claim 3 or 4, wherein the query request further includes a second keyword, and the second keyword is used to indicate the aggregate function; and correspondingly, before the aggregating information in each of the at least one group by using an aggregate function, the method further comprises:
determining the aggregate function based on the second keyword.

6. The method according to any one of claims 3 to 5, wherein the generating the query response based on the aggregate result of each group comprises any one of the following:
generating the query response based on the aggregate result of each group and the value of the target attribute corresponding to each group; and
obtaining, through filtering based on the aggregate result of each group, a target group whose aggregate result meets a filter criteria from the at least one group, and generating the query response based on information in the target group.

7. The method according to claim 6, wherein the query request further comprises the filter criteria.

8. The method according to claim 6, wherein the generating the query response based on information in the target group comprises:
generating the query response based on the aggregate result of the target group and a value of the target attribute of a data object in the target group; or
generating the query response based on a value of each attribute of a data object in the target group.

9. The method according to any one of claims 1 to 8, wherein the query response comprises the value of the target attribute corresponding to each group and/or the aggregate result of each group.

10. An information query apparatus, wherein the apparatus comprises:
a receiving module, configured to receive a query request from a network management device, wherein the query request comprises a query object, a target attribute, and a first keyword, the first keyword is used to instruct a network device to group information of the query object, and the target attribute is an attribute based on which the grouping is performed;
a grouping module, configured to group the information of the query object based on the target attribute to obtain at least one group;
a generation module, configured to generate a query response based on the at least one group; and
a sending module, configured to send the query response to the network management device.

11. The apparatus according to claim 10, wherein the grouping module comprises:
an obtaining submodule, configured to obtain at least one value of the target attribute; and
a grouping submodule, configured to group the information of the query object based on the at least one value to obtain the at least one group, wherein each value corresponds to one group.

12. The apparatus according to claim 10 or 11, wherein the generation module is configured to:
aggregate information in each of the at least one group by using an aggregate function, to obtain an aggregate result of each group; and generate the query response based on the aggregate result of each group; or
generate the query response based on a value of a target attribute corresponding to each of the at least one group.

13. The apparatus according to claim 12, wherein the generation module is configured to perform any one of the following:
obtaining a quantity of pieces of information in each group by using a quantity statistics function, and using the quantity as the aggregate result of each group;
obtaining a maximum value of information in each group by using a maximum value function, and using the maximum value as the aggregate result of each group;
obtaining a minimum value of information in each group by using a minimum value function, and using the minimum value as the aggregate result of each group;
obtaining an average value of information in each group by using an average value function, and using the average value as the aggregate result of each group;
obtaining a sum of information in each group by using a summation function, and using the sum as the aggregate result of each group;
obtaining a variance of information in each group by using a variance function, and using the variance as the aggregate result of each group; and
obtaining a standard deviation of information in each group by using a standard deviation function, and using the standard deviation as the aggregate result of each group.

14. The apparatus according to claim 12 or 13, wherein the query request further comprises a second keyword, and the second keyword is used to indicate the aggregate function; and correspondingly, the apparatus further comprises:
a determining module, configured to determine the aggregate function based on the second keyword.

15. The apparatus according to any one of claims 12 to 14, wherein the generation module is configured to perform any one of the following:
generating the query response based on the aggregate result of each group and the value of the target attribute corresponding to each group; and
obtaining, through filtering based on the aggregate result of each group, a target group whose aggregate result meets a filter criteria from the at least one group, and generating the query response based on information in the target group.

16. The apparatus according to claim 15, wherein the query request further comprises the filter criteria.

17. The apparatus according to claim 15, wherein the generation module is configured to:
generate the query response based on the aggregate result of the target group and a value of the target attribute of a data object in the target group; or
generate the query response based on a value of each attribute of a data object in the target group.

18. The apparatus according to any one of claims 10 to 17, wherein the query response comprises the value of the target attribute corresponding to each group and/or the aggregate result of each group.

19. A network device, wherein the network device comprises one or more processors and one or more volatile or non-volatile memories, the one or more volatile or non-volatile memories store instructions, and the instruction is loaded and executed by the one or more processors to implement the information query method according to any one of claims 1 to 9.

20. A computer readable storage medium, wherein the storage medium stores an instruction, and the instruction is loaded and executed by a processor to implement the information query method according to any one of claims 1 to 9.
